# EUROPEAN PATENT APPLICATION

(11) **EP 4 507 267 A1**
(43) Date of publication of application: **12.02.2025**
(21) Application number: 24194010.5
(22) Date of filing: 12.08.2024
(51) Int. Cl.: H04L 43/55, H04L 41/082

(54) **METHODS FOR SUPPORT OF CANARY DEPLOYMENTS FOR A CONTAINERIZED NETWORK FUNCTION**

(30) Priority: 10.08.2023 IN 202321053754; 06.08.2024 US 202418795446
(71) Applicant: Mavenir Systems, Inc., Richardson, TX 75081 (US)
(72) Inventor: CANDADE, Prashanth, 560076 Bangalore (IN); KAUL, Suveer, 560064 Bangalore (IN); LOURDU RAJA, Charles Santhosam, 560048 Bangalore (IN)
(74) Representative: dompatent von Kreisler Selting Werner - Partnerschaft von Patent- und Rechtsanwälten mbB

(57) **Abstract**

Canary upgrades are currently supported only for one set of microservices that are stateless. This does not allow for canary evaluation of all microservices that are part of a Containerized Network Function (CNF). This CNF level Canary deployment extends the capability to all microservices in a CNF deployed in different modes like stateless, stateful, singleton, active/standby. CNF level Canary deployment facilitates evaluation of complete CNF in a controlled fashion before extending the same to all production deployments. In addition, Canary deployment is also extended across CNFs to facilitate evaluation of a feature/performance across multiple CNFs of a new release in a controlled fashion.

## Description

### BACKGROUND

### 1. Field of the Invention

The present disclosure is related to canary deployment for a containerized network function (CNF). More particularly, the present disclosure is related to a canary deployment allowing for validation of multiple microservices.

### 2. Description of Related Art

Canary as an upgrade strategy is applicable only to certain services of the complete Containerized Network Function (CNF). So, with a canary upgrade strategy, it is not possible to evaluate the state of the new release CNF functionality.

A canary upgrade strategy is a deployment and upgrade strategy for a microservice that will have most replicas in the old release, and one or a few replicas in the new release (e.g., called Canary). A Load Balancer will then route some controlled / specified amount of traffic to canary and once canary performance is validated, a rolling upgrade is performed on the rest to migrate old to new.

The benefits of Canary include the ability to validate a new release in production and validate its performance and provide for the controlled Introduction of some new features.

However, when using Canary upgrade, operators would typically have to upgrade the complete CNF using a rolling upgrade strategy or a recreate upgrade strategy. Operators would observe Key Performance Indicators (KPIs), stability, and new features of the upgraded CNF. Based on this analysis and observation, operators would then have to decide on whether the upgrade was a success or a failure. If the Operators are not satisfied with the new release CNF, the operators would then need to roll back the CNF to the older release.

There are several current drawbacks of Canary upgrade in a Radio Access Network (RAN) context (as well as other CNFs). For instance, Canary is applicable to uS with replicas at each microservice level, but it is not applicable to microservices that are single or High Availability (HA) mode like active-standby. Additionally, the overall functionality of CNF is a collective and collaborative activity of all microservices. Therefore, the entire whole CNF must be evaluated in a new release, not just one upgraded microservice. Another drawback is that when Stream Control Transmission Protocol (SCTP) is utilized for a microservice, there is no generic Load Balancer (LB) for SCTP that is available, so a custom LB must include a built-in logic to perform the function. Additionally, RAN operations are typically evaluated by KPIs where the KPIs are defined at the Network Function (NF) level. There is no support by observability framework to evaluate counters or define KPIs specific to canary microservices.

There are other current drawbacks of Canary upgrades in a RAN context. For example, a RAN Operator historically used to have a mechanism called first or field office Application (FOA). Here a very small portion of the operator's network would be upgraded to the new release. It would take commercial traffic and all required features and KPI would be evaluated. There is no upgrade mechanism in the containerized world to support this. Typically, a RAN function or feature extends across the following nodes: the Centralized Unit Control Plane (CU-CP), the Centralized Unit User Plane (CU-UP) and the Distributed Unit (DU). It is recommended that upgrades in RAN nodes should take place together in the same release. This means that Release validation and Feature validation in the operator's network (before complete rollout) will require all CU-CP/UP and DU components.

With respect to observability, counters are tagged with standard identifiers like NF-Ids, NRCGI, and so on. Counters related to a minimum set of 1 CU-CP, 1 CU-UP and 1 DU can be grouped and observed together. It is not possible, however, to extract counters per microservice and evaluate important KPIs. It is understood that upgrading one NF or canary of one microservice does not provide the operator the flexibility to evaluate a new release feature. KPIs are typically defined for the entire NF. As such, evaluating performance of one microservice in a canary deployment does not provide proper feedback on the new release.

Due to limitations of this approach, Telecom Operators typically do not prefer Canary upgrade. In the case of Telecom deployments, such as RAN deployments, the upgrade and rollback can lead to increased maintenance activities as well as possible disruption of the service, which should be avoided if possible.

Accordingly, there is a need for canary deployment for a CNF that overcomes, alleviates, and/or mitigates one or more of the aforementioned and other adverse effects of the prior art.

### SUMMARY

Accordingly, what is needed is a system and method for canary deployment for a CNF allowing for validation of multiple microservices.

It is further desired to provide a system and method for canary upgrade in a RAN context that is applicable to microservices that are single or High Availability (HA) mode like active-standby.

It is still further desired to provide a system and method for canary upgrade in a RAN context that obviates the problem of needing a custom LB or a microservice.

It is yet further desired to provide a system and method for canary upgrade in a RAN context that provides observability framework to evaluate counters and define KPIs specific to canary microservices.

In one configuration a system is provided that facilitates Canary deployment for Containerized Network Function (CNF) as a whole. Typically, CNF is comprised of multiple microservices. These microservices could, for example, be deployed in multiple modes. These could include, for example, 1) microservices with multiple Replicas (all active) with a LB, either standard or custom LB; 2) microservice with two replicas which perform an active-standby role; 3) microservices that are single deployments - stateful; and 4) microservices that are single deployments - stateless. Canary deployment for a whole CNF shall ensure a canary deployment for all the microservices and provide a mechanism to observe and evaluate the Canary for the CNF.

In another configuration a system is provided that facilitates Canary deployment across CNFs. In some cases, multiple CNFs together provide a solution and service. For example, in telecom, with the Split2 support where the Control Unit (CU) and DU functionality are separated, a feature could be spread across CU-CP, CU-UP and DU. Canary Deployment across CNFs shall provide for a canary deployment that will support microservices in all the CNFs.

In such scenarios, the operators would like to have a new release deployment to evaluate across multiple CNFs.

For this application, the following definitions shall apply:

The term "data" as used herein means any indicia, signals, marks, symbols, domains, symbol sets, representations, and any other physical form or forms representing information, whether permanent or temporary, whether visible, audible, acoustic, electric, magnetic, electromagnetic or otherwise manifested. The term "data" as used to represent predetermined information in one physical form shall be deemed to encompass any and all representations of the same predetermined information in a different physical form or forms.

The term "network" as used herein includes both networks and internetworks of all kinds, including the Internet, and is not limited to any particular type of network or inter-network.

The terms "first" and "second" are used to distinguish one element, set, data, object or thing from another, and are not used to designate relative position or arrangement in time.

The terms "coupled", "coupled to", "coupled with", "connected", "connected to", and "connected with" as used herein each mean a relationship between or among two or more devices, apparatus, files, programs, applications, media, components, networks, systems, subsystems, and/or means, constituting any one or more of (a) a connection, whether direct or through one or more other devices, apparatus, files, programs, applications, media, components, networks, systems, subsystems, or means, (b) a communications relationship, whether direct or through one or more other devices, apparatus, files, programs, applications, media, components, networks, systems, subsystems, or means, and/or (c) a functional relationship in which the operation of any one or more devices, apparatus, files, programs, applications, media, components, networks, systems, subsystems, or means depends, in whole or in part, on the operation of any one or more others thereof.

In one configuration, a system for providing canary upgrade for a Radio Access Network (RAN) is provided comprising: a Control Unit (CU) including a Control Plane (CU-CP) and a Control Unit User Plane (CU-UP), the CU-CP coupled to the CU-UP, and a Distributed Unit (DU) coupled to the CU-UP. The system further comprises a Canary Upgrade deployment controller providing canary deployment across Containerized Network Functions (CNF) including the CU-CP, the CU-UP and the DU where canary deployment is supported for each CNF individually. Finally, the system comprises an evaluation interface providing Key Performance Indicators (KPIs) at the canary level facilitating evaluation of a CNF.

The above-described and other features and advantages of the present disclosure will be appreciated and understood by those skilled in the art from the following detailed description, drawings, and appended claims.

### DESCRIPTION OF THE DRAWINGS

FIG. 1 is a block diagram of typical O-RAN architecture,
FIG. 2 is a functional illustration of the operation of the system for CNF deployed in release V1,
FIG. 3 is a functional illustration of the operation of the system for CNF deployed in canary,
FIG. 4 is a functional illustration of the operation of the system for CNF deployed in release V2,
FIG. 5 is a diagram illustrating the function for CNF deployment without canary,
FIG. 6 is a diagram illustrating the function for CNF deployment with existing canary controller, and
FIG. 7 is a diagram illustrating the function for CNF deployment with CNF level canary controller.

### DETAILED DESCRIPTION

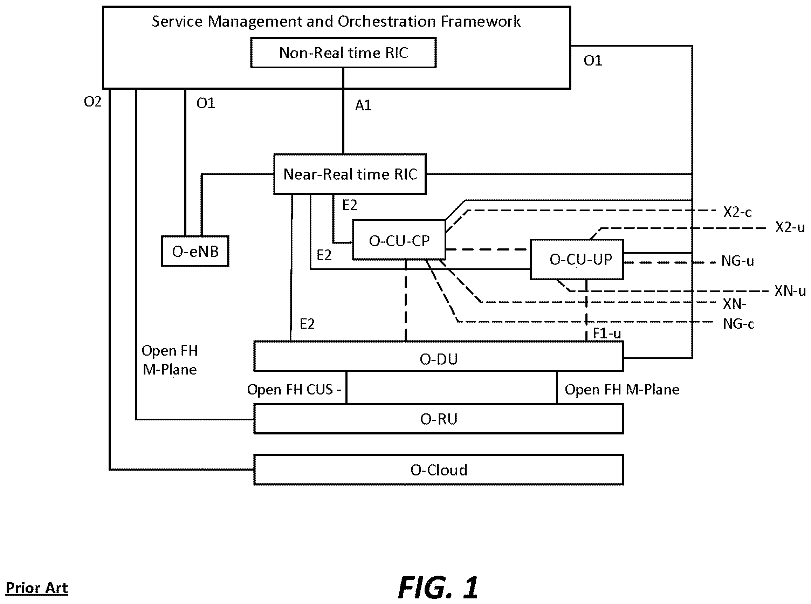

Referring now to the drawings. An overview of a Radio Access Network (RAN) with a CU (Centralized Unit), a DU (Distributed Unit), and a RU (Radio Unit), near-real-time Radio Intelligent Controller (RIC) and non-real-time RIC is illustrated in FIG. 1.

As noted with respect to FIG. 1, the CU and the DU are connected using the F1 interface (with F1-C for control plane and F1-U for user plane traffic) over a mid-haul (MH) path. One DU could host multiple cells (e.g., one DU could host 24 cells) and each cell may support many users. For example, one cell may support 600 Radio Resource Control (RRC) Connected users and out of these 600, there may be 200 Active users (i.e., users that have data to send at a given point of time).

A cell site could comprise multiple sectors and each sector may support multiple cells. For example, one site could comprise three sectors and each sector could support eight cells (with eight cells in each sector on different frequency bands). One CU-CP (CU-Control Plane) could support multiple DUs and thus multiple cells. For example, a CU-CP could support 1,000 cells and around 100,000 User Equipment (UE). Each UE could support multiple Data Radio Bearers (DRB) and there could be multiple instances of CU-UP (CU-User Plane) to serve these DRBs. For example, each UE could support 4 DRBs, and 400,000 DRBs (corresponding to 100,000 UEs) may be served by five CU-UP instances (and one CU-CP instance).

The DU could be in a private data center, or it could be located at a cell-site. The CU could also be in a private data center or even hosted on a public cloud system. The DU and CU are typically located at different physical locations. The CU communicates with a 5G core system, which could also be hosted in the same public cloud system (or could be hosted by a different cloud provider). A RU (Radio Unit) is located at a cell-site and communicates with the DU via a front-haul (FH) interface.

The E2 nodes (CU and DU) are connected to the near-real-time RIC using the E2 interface. The E2 interface is used to send data (e.g., user, cell, slice KPMs) from the RAN, and deploy control actions and policies to the RAN at near-real-time RIC. The application or service at the near-real-time RIC that deploys the control actions and policies to the RAN are called xApps. The near-real-time RIC is connected to the non-real-time RIC using the A1 interface.

**Canary Deployment for CNF as a whole.** In this configuration, the CNF can have microservice deployed in various modes. These may include:
Active - Standby
All active (multiple replicas)
Single - Stateful
Single - Stateless

A canary deployment of a CNF shall include a deployment strategy for each such mode of microservice. A Canary Controller (CC) shall take care of such CNF level canary. The CC shall take care of canary deployment for each of the different modes of microservices. The CC shall be responsible for acting like a LB and routing the traffic accordingly.

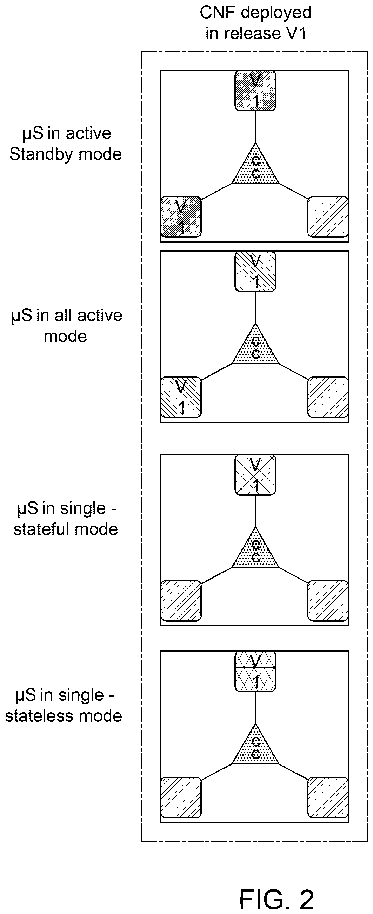

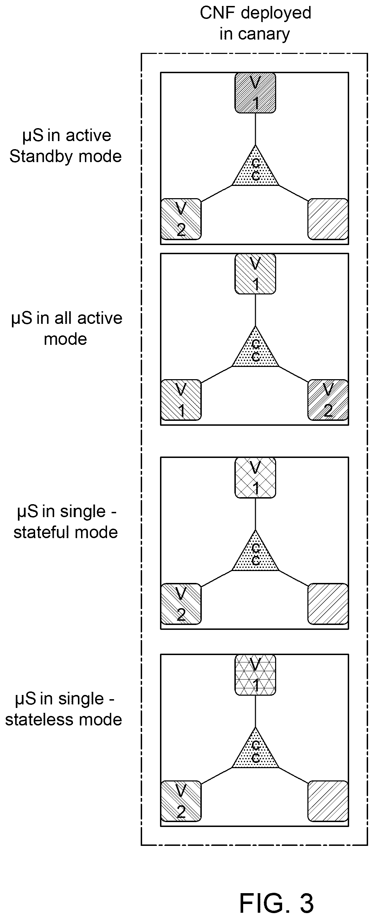

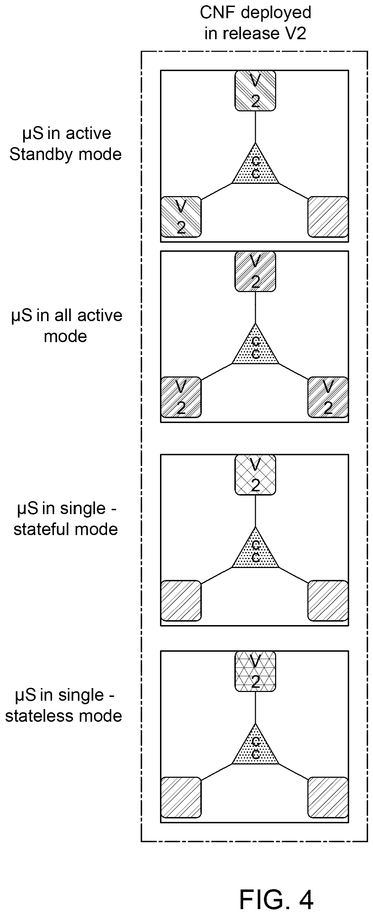

Referring now to FIGS. 2-4, the system functionality is illustrated. For example, FIG. 2 illustrates CNF deployed in release V1, FIG. 3 illustrates CNF deployed in canary, and FIG. 4 illustrates CNF deployed in release V2.

In FIGS. 2-4, the first row illustrates uS in active Standby mode, the second row illustrates uS in all active mode, the third row illustrates uS in single - stateful mode, and the fourth row illustrates uS in single - stateless mode.

In the active Standby mode of deployment, the canary controller supports an active-standby deployment that has one service (active) in new release and one service (standby) in old release as can be seen in FIGS. 2-4. Service for such a canary entity shall be provided by the new release uS. For this mode of deployment, error scenarios, fallback scenarios need to be handled independent of the CC. Additionally, backward compatibility aspects will be handled by the CNF.

In the All Active mode of deployment in FIGS. 2-4, this is identical to currently known canary strategies.

In the Singleton Stateful mode of deployment in FIGS. 2-4, the canary controller will support a deployment that has a service in new release. The service for such a canary entity will be provided by the new release uS. For this mode of deployment, error scenarios, fallback scenarios need to be handled independent of the CC. Additionally, backward compatibility aspects will be handled by the CNF.

In the Singleton Stateless mode of deployment in FIGS. 2-4, the canary controller will support a deployment that has a service in new release. The service for such a canary entity shall be possible to treat like existing canary strategy. For this mode of deployment, error scenarios and fallback scenarios need to be handled independent of the CC. Additionally, backward compatibility aspects will be handled by the CNF.

The Canary Controller shall allow: 1) fallback to older release, followed by an upgrade or 2) upgrade in a rolling fashion to a new release. To accomplish this, the evaluation of metrics for a CNF in canary mode must be redefined. This would include: the uS shall continue to report metrics: the canary uS shall add an additional label specifying it as canary, where the additional label or software version can serve as canary KPI distinguisher; a subset of KPIs shall be defined for a canary CNF - these KPIs could be same definition as non-canary KPIs or could be redefined specific to canary as well; and it should be indicated that KPIs for certain duration are from canary CNF.

Table 1 captures how the methods described in the specification for Canary Deployment for CNF as a whole address various drawbacks.

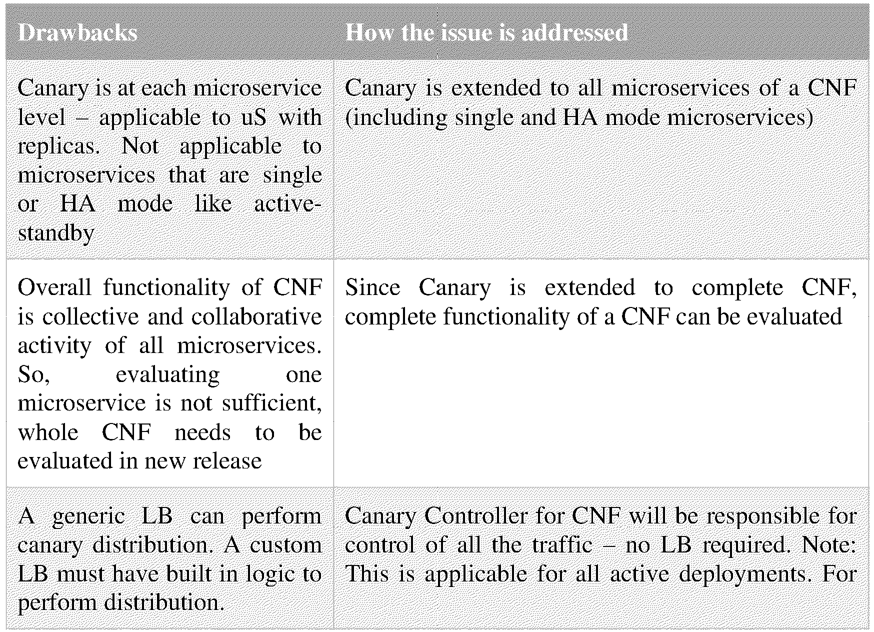

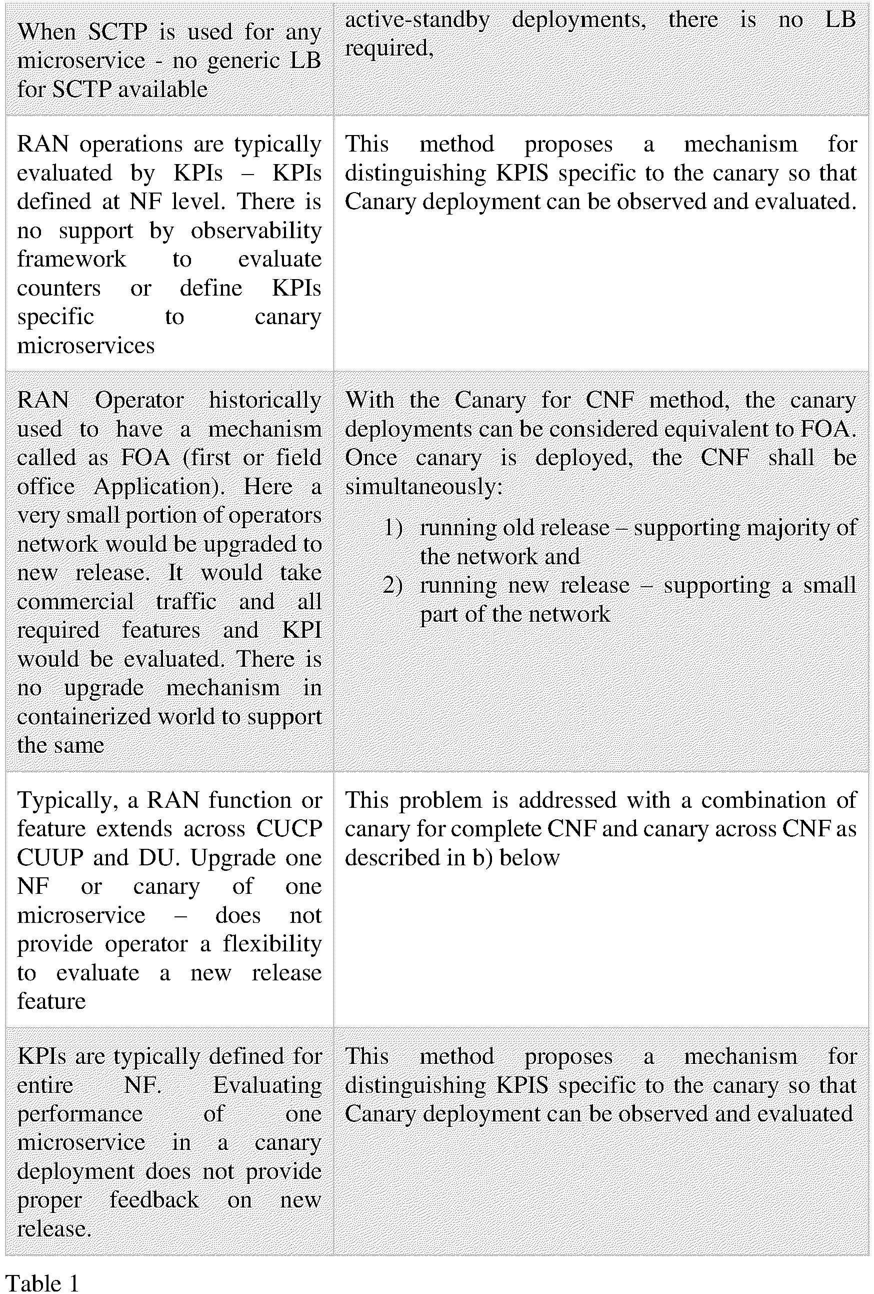

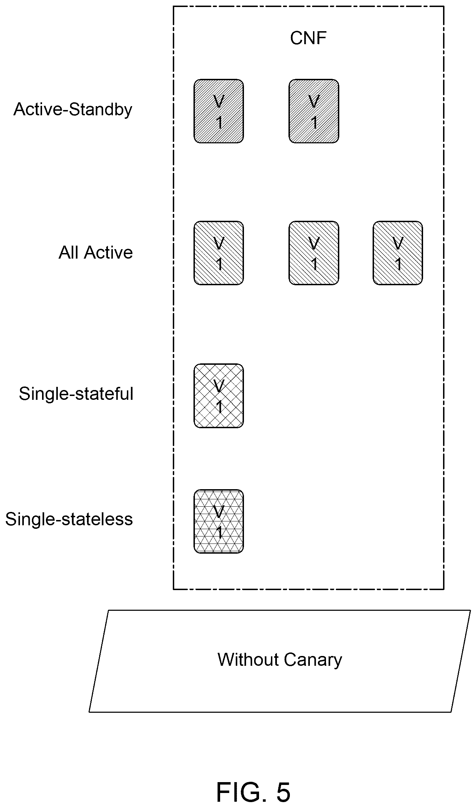

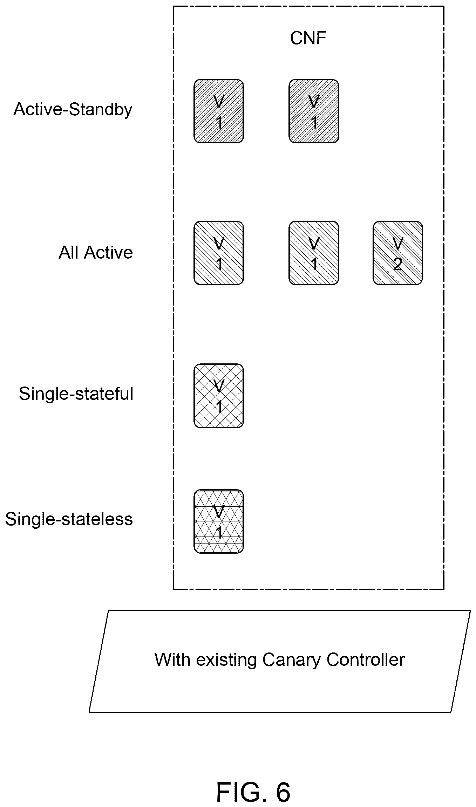

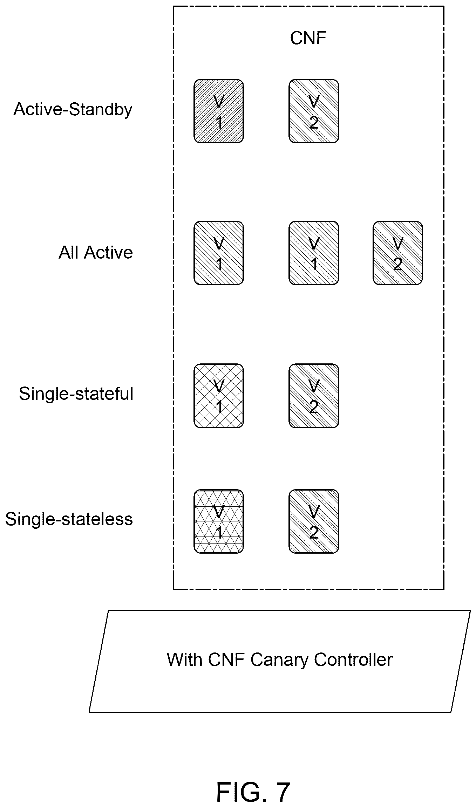

FIGS. 5 - 7 provide examples of how the canary deployment will look with CNF level Canary Controller. The limitation of the existing canary controller, it can handle only the "all active" deployment. With CNF canary controller, all deployment modes can have a canary deployment covering all aspects of CNF functionality.

**Canary across CNFs.** Evaluation of upgrade across CNFs is applicable to canary and recommended to have a canary that spreads across CNFs. For example, in deployments in telecom with CNFs like CU-CP, CU-UP and DU. In this case, a deployment controller shall ensure a canary deployment across CNFs where each such CNF shall support a canary deployment. Additionally, observability frameworks shall allow operators to evaluate this set of canary CNFs by grouping and providing appropriate canary level KPIs.

Table 2 captures how the methods described in the specification for Canary Deployment across CNFs address various drawbacks.

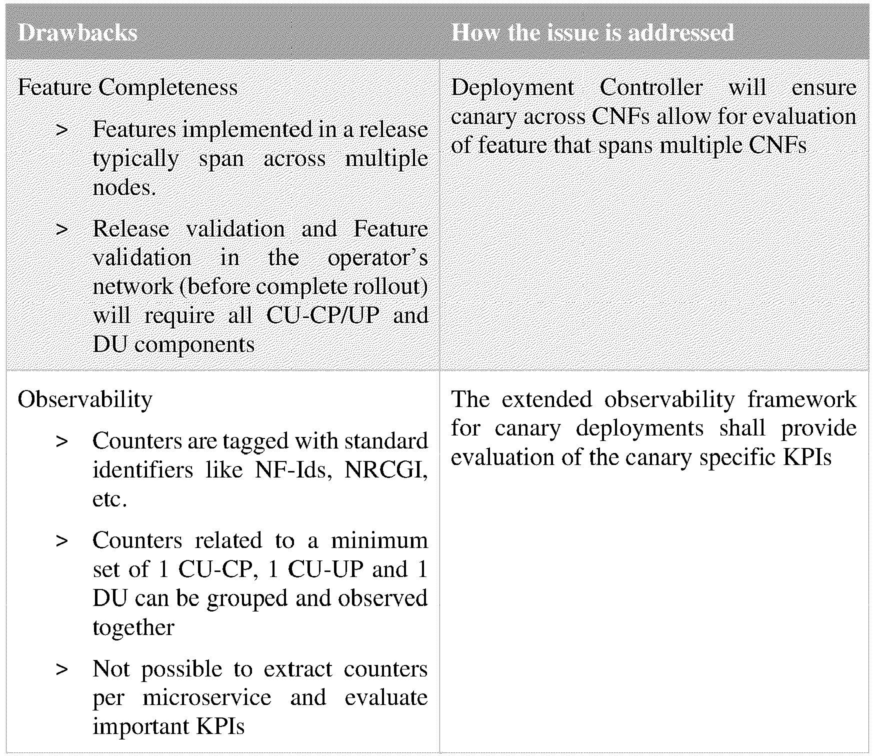

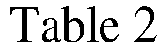

It should be noted that, while various functions and methods have been described and presented in a sequence of steps, the sequence has been provided merely as an illustration of one advantageous embodiment, and that it is not necessary to perform these functions in the specific order illustrated. It is further contemplated that any of these steps may be moved and/or combined relative to any of the other steps. In addition, it is still further contemplated that it may be advantageous, depending upon the application, to utilize all or any portion of the functions described herein.

While the present disclosure has been described with reference to one or more exemplary embodiments, it will be understood by those skilled in the art that various changes may be made and equivalents may be substituted for elements thereof without departing from the scope of the present disclosure. In addition, many modifications may be made to adapt a particular situation or material to the teachings of the disclosure without departing from the scope thereof. Therefore, it is intended that the present disclosure not be limited to the particular embodiment(s) disclosed as the best mode contemplated, but that the disclosure will include all embodiments falling within the scope of the appended claims.

## Claims

1. A system for providing canary upgrade for a Radio Access Network (RAN) comprising:
a Control Unit (CU) comprising a Control Plane (CU-CP) and a Control Unit User Plane (CU-UP), the CU-CP coupled to the CU-UP;
a Distributed Unit (DU) coupled to the CU-UP;
a Canary Upgrade deployment controller providing canary deployment across Containerized Network Functions (CNF) including the CU-CP, the CU-UP and the DU where canary deployment is supported for each CNF individually;
an evaluation interface providing Key Performance Indicators (KPIs) at the canary level facilitating evaluation of a CNF.

2. The system of Claim 1, wherein the evaluation interface facilitates validation of a micro service.

3. The system of Claim 2, wherein the evaluation interface facilitates validation of multiple microservices.

4. The system of Claim 3, wherein the multiple microservices are deployed in multiple modes.

5. The system of Claim 4, wherein the multiple modes include a microservice with multiple replicas that are all active with a Load Balancer (LB).

6. The system of Claim 4, wherein the multiple modes include a microservice with two replicas that perform an active-standby role.

7. The system of Claim 4, wherein the multiple modes include a microservice that comprises a single stateful deployment.

8. The system of Claim 4, wherein the multiple modes include a microservice that comprises a single stateless deployment.

9. The system of Claim 1, wherein the Canary Upgrade deployment controller provides canary deployment across all CNFs in a set of CNFs ensuring canary deployment for all microservices in the canary upgrade and the evaluation interface facilitates evaluation of the canary deployment for the set of CNFs.

10. The system of Claim 9, wherein the evaluation interface facilitates feature evaluations at the CNF level prior to rollout of the Canary Upgrade.

11. The system of Claim 9, wherein the evaluation interface facilitates feature evaluations at the CNF level across the set of CNFs.

12. The system of Claim 9, wherein the evaluation interface facilitates an observability framework to evaluate counters and defines KPIs specific to canary microservices.

13. The system of Claim 9, wherein the CU and DU functionality are functionally separated and canary deployment occurs across the set of CNFs.
